# EUROPÄISCHE PATENTSCHRIFT

(11) **EP 3 069 440 B1**
(45) Veröffentlichungstag und Bekanntmachung des Hinweises auf die Patenterteilung: **07.06.2023**
(21) Anmeldenummer: 14796750.9
(22) Anmeldetag: 10.11.2014
(51) Int. Cl.: H02P 6/00

(54) **ANTRIEBSVORRICHTUNG FÜR EIN FLÜGELRAD EINER STRÖMUNGSMASCHINE**
DRIVE DEVICE FOR THE IMPELLER OF A FLUID FLOW MACHINE
DISPOSITIF D'ENTRAINEMENT POUR UNE AUBE D'UNE MACHINE DU FLUIDE

(30) Priorität: 12.11.2013 AT 507542013
(43) Veröffentlichungstag der Anmeldung: 21.09.2016
(73) Patentinhaber: ZITT Motoren AG, 8045 Zürich (CH)
(72) Erfinder: HUNZIKER, Urs, CH-8706 Meilen (CH)
(74) Vertreter: Dilg, Andreas
(86) Internationale Anmeldenummer: PCT/EP2014/074151
(87) Internationale Veröffentlichungsnummer: WO 2015/071213

(56) Entgegenhaltungen:
- EP-A1- 2 418 756
- EP-A2- 2 566 044

## Beschreibung

### Technisches Gebiet

Die Erfindung bezieht sich auf eine Antriebsvorrichtung für ein Flügelrad einer Strömungsmaschine mit einem Elektromotor, der über einen an ein Wechselstromnetz angeschlossenen Frequenzumrichter ansteuerbar ist.

### Stand der Technik

Lüfter werden in der Gebäudetechnik und in der Industrie vielfältig eingesetzt, wobei häufig eine Steuerung der Förderleistung gefordert wird. Um in einer energiesparenden Weise auf die Förderleistung solcher Lüfter Einfluss nehmen zu können, ist es bekannt, die Drehzahl der als Antrieb zum Einsatz kommenden Asynchronmotoren über einen Frequenzumrichter zu verstellen, um die Asynchronmotoren ständig in einem günstigen Betriebsbereich betreiben zu können. Da die Förderleistung der Lüfter über die Drehzahl des Flügelrads einfach gesteuert werden kann, wobei das benötigte Antriebsmoment mit sinkender Drehzahl angenähert quadratisch abnimmt, können durch ein Absenken der Drehzahl des Asynchronmotors über den Frequenzumrichter hinsichtlich des Energiebedarfs vergleichsweise günstige Antriebsbedingungen sichergestellt werden, weil auch das Drehmoment der Asynchronmotoren angenähert quadratisch mit der Drehzahl sinkt. Allerdings sinkt auch der Wirkungsgrad der Asynchronmotoren bei reduzierter Drehzahl im Vergleich zum Betrieb mit der Nenndrehzahl. Diese Zusammenhänge gelten nicht nur für den Antrieb von Lüftern, sondern auch von Pumpen, also allgemein für den Antrieb von Strömungsmaschinen mit einem entsprechenden Flügelrad.

### Darstellung der Erfindung

Der Erfindung liegt somit die Aufgabe zugrunde, den Gesamtwirkungsgrad einer Strömungsmaschine mit einem Flügelrad zu verbessern, ohne auf eine für die Förderleistung günstige Drehzahlsteuerung des Flügelrads verzichten zu müssen.

Ausgehend von einer Antriebsvorrichtung der eingangs geschilderten Art löst die Erfindung die gestellte Aufgabe mittels einer Antriebsvorrichtung für ein Flügelrad einer Strömungsmaschine mit den Merkmalen gemäß dem unabhängigen Anspruch.

Bürstenlose, permanenterregte Synchronmotoren mit innerhalb des Rotors angeordneten Permanentmagneten besitzen einen optimierten magnetischen Kreis, der es erlaubt, den Wirkungsgrad mit gegenüber der Nenndrehzahl zunehmender Drehzahl und der damit verbundenen Leistungssteigerung zu verbessern. 80 weist beispielsweise ein solcher Synchronmotor mit einer Nennleistung von 4 kW bei einer Nenndrehzahl von 1000 U/min einen Wirkungsgrad von 93 % auf, der sich bei einer Drehzahlerhöhung auf 4000 U/min und einer damit verbundenen Leistungssteigerung auf 16 kW auf über 98 % erhöht. Die Erhöhung der Drehzahlen solcher Antriebsmotoren widerspricht zunächst ihrem Einsatz für den Antrieb von Strömungsmaschinen mit Flügelrädern, weil eine Drehzahlsteigerung gegenüber der Nenndrehzahl, für die diese Flügelräder ausgelegt sind, eine zunehmend drastische Verschlechterung des Wirkungsgrads dieser Flügelräder zur Folge hat. Aus diesem Grund wird das Flügelrad über ein Untersetzungsgetriebe mit einem vorgegebenen Übersetzungsverhältnis angetrieben, das trotz des Betriebs des Synchronmotors mit einer die Nenndrehzahl erheblich übersteigenden Drehzahl den Antrieb des Flügelrads in einem für den Wirkungsgrad des Flügelrads vorteilhaften Drehzahlbereich erlaubt, sodass sich eine merkliche Verbesserung des Gesamtwirkungsgrads für die Strömungsmaschine und deren Antrieb trotz der durch den Frequenzumformer und das Untersetzungsgetriebe bedingten höheren Verluste ergibt.

Es wird jedoch nicht nur eine Steigerung des Gesamtwirkungsgrads erzielt, sondern auch der Einsatz von Antriebsmotoren kleinerer Bauart ermöglicht. Die über den Frequenzumformer erreichte Drehzahlsteigerung geht ja mit einer Leistungssteigerung einher, die den Einsatz von Synchronmotoren mit einer entsprechend niedrigeren Nennleistung erlaubt. Das Nenndrehmoment der Synchronmotoren bleibt dabei über den die Nenndrehzahl übersteigenden Drehzahlbereich im Wesentlichen konstant.

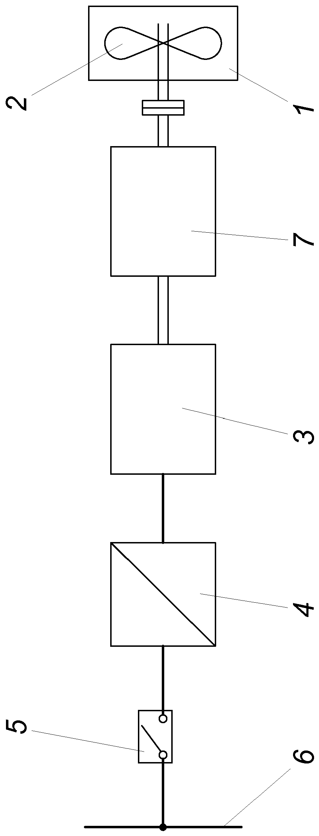

### Kurze Beschreibung der Zeichnung

In der Zeichnung ist der Erfindungsgegenstand beispielsweise dargestellt und zwar wird eine erfindungsgemäße Antriebsvorrichtung für ein Flügelrad einer Strömungsmaschine in einem schematischen Blockschaltbild gezeigt.

### Weg zur Ausführung der Erfindung

Die dargestellte Strömungsmaschine 1, beispielsweise ein Lüfter für eine Gebäudelüftung, weist ein Flügelrad 2 auf, das von einem Synchronmotor 3 angetrieben wird. Dieser bürstenlose und permanenterregte Synchronmotor 3 mit Gegen-EMK umfasst innerhalb des Rotors vorgesehene Permanentmagnete. Im Stator ist eine dreiphasige Wicklung untergebracht, die über einen Frequenzumwandler 4 angesteuert wird. Die Kommutierung erfolgt elektronisch durch den Frequenzumrichter 4, der auch die übrige Steuerung des Synchronmotors 3 einschließlich einer Fangschaltung übernimmt und über einen Schalter 5 an ein dreiphasiges Wechselstromnetz 6 angeschlossen wird.

Über den Frequenzumformer 4 wird die Netzfrequenz vervielfacht und beispielsweise von der Netzfrequenz von 50 Hz auf eine Frequenz von 200 Hz angehoben, was eine Vervierfachung der Nenndrehzahl des Synchronmotors von 1000 auf 4000 U/min zur Folge hat und eine Wirkungsgraderhöhung mit sich bringt, und zwar bei angenähert gleichbleibendem Drehmoment.

Um das Flügelrad 2 der Strömungsmaschine 1 durch den Synchronmotor 3 entsprechend der jeweils geforderten Förderleistung der Strömungsmaschine 1 antreiben zu können, muss die Drehzahl des über den Frequenzumrichter 4 angesteuerten Synchronmotors 3 mit einem vorgegebenen Übersetzungsverhältnis reduziert werden, was mit Hilfe eines mechanischen Untersetzungsgetriebes 7 zwischen dem Synchronmotor 3 und dem Flügelrad 2 sichergestellt wird. Damit ist eine für die Strömungsmaschine 1 vorteilhafte Drehzahlsteuerung des Flügelrads 2 über den Frequenzumrichter 4 in einem für die Förderleistung der Strömungsmaschine 1 günstigen Wirkungsgradbereich möglich, sodass trotz des zusätzlichen Untersetzungsgetriebes 7 und der höheren Verluste im Bereich des Frequenzumrichters 4 der Gesamtwirkungsgrad der aus der Antriebsanordnung und der Strömungsmaschine 1 bestehenden Anlage im Durchschnittsbetrieb deutlich gesteigert werden kann.

## Patentansprüche

1. Antriebsvorrichtung für ein Flügelrad (2) einer Strömungsmaschine (1), mit einem Elektromotor und einem an ein Wechselstromnetz (6) angeschlossenen Frequenzumrichter (4), wobei der Elektromotor über den Frequenzumrichter (4) ansteuerbar ist,
**dadurch gekennzeichnet,**
**dass** die Antriebsvorrichtung ein Untersetzungsgetriebe (7) aufweist, dass der Elektromotor als bürstenloser, permanenterregter Synchronmotor (3) mit innerhalb des Rotors angeordneten Permanentmagneten ausgebildet ist, und dass der Frequenzumrichter (4) eingerichtet ist, den Synchronmotor (3) mit einer die Netzfrequenz übersteigenden Frequenz anzusteuern, und dass das Untersetzungsgetriebe (7) zwischen den Synchronmotor (3) und das Flügelrad (2) geschaltet ist, sodass der Synchronmotor (3) das Flügelrad (2) unter Zwischenschaltung des Untersetzungsgetriebes (7) antreibt.

## Claims

1. Drive device for an impeller (2) of a fluid flow machine (1), having an electric motor and a frequency converter (4) connected to an alternating current mains network (6), wherein the electric motor is controllable via the frequency converter (4),
**characterized in that**
the drive device comprises a reduction gear (7), **in that** the electric motor is formed as a brushless, permanently excited synchronous motor (3) with permanent magnets arranged inside the rotor, and **in that** the frequency converter (4) is configured to control the synchronous motor (3) with a frequency exceeding the mains frequency, and **in that** the reduction gear (7) is connected between the synchronous motor (3) and the impeller (2) so that the synchronous motor (3) drives the impeller (2) with the interposition of the reduction gear (7).

## Revendications

1. Dispositif d'entraînement pour une turbine (2) d'une turbomachine (1), ayant un moteur électrique et un convertisseur de fréquence (4) raccordé à un réseau de courant alternatif (6), le moteur électrique étant apte à être commandé par l'intermédiaire du convertisseur de fréquence (4),
**caractérisé en ce que**
le dispositif d'entraînement présente un réducteur (7), **en ce que** le moteur électrique est conçu comme un moteur synchrone (3), sans balais et à excitation permanente, ayant des aimants permanents disposés à l'intérieur du rotor, et **en ce que** le convertisseur de fréquence (4) est conçu de façon à commander le moteur synchrone (3) à une fréquence supérieure à la fréquence du réseau, et **en ce que** le réducteur (7) est monté entre le moteur synchrone (3) et la turbine (2), de sorte que le moteur synchrone (3) entraîne la turbine (2) par l'intermédiaire du réducteur (7).
